# EUROPEAN PATENT SPECIFICATION

(11) **EP 1 375 397 B1**
(45) Date of publication and mention of the grant of the patent: **30.08.2006**
(21) Application number: 03077046.5
(22) Date of filing: 30.06.2003
(51) Int. Cl.: B65G 59/06, B65G 47/90, B65G 61/00, B66C 1/32

(54) **Apparatus and method for manipulating plate-shaped construction elements**
Vorrichtung und Verfahren zum Handhaben von plattenförmigen Bauelementen
Dispositif et procédé pour manipuler des éléments de construction en forme de plaques

(30) Priority: 28.06.2002 NL 1020961
(43) Date of publication of application: 02.01.2004
(73) Proprietor: Bouw & Handelmij. Nijkerk B.V., 3861 NC Nijkerk (NL)
(72) Inventor: Morren, Teus, 3781 XP Voorthuizen (NL)
(74) Representative: Prins, Adrianus Willem

(56) References cited:
- EP-A- 1 048 596
- CH-A- 446 403
- DE-A- 2 730 626
- US-A- 4 582 407

## Description

The invention relates to an apparatus for manipulating substantially plate-shaped construction elements.

In construction, relatively sizeable and proportionally heavy plate-shaped parts, such as prefab panels or reinforcement mats welded from metal wire, regularly need to be moved from a supply or storage location to an actual location of use. When the distances to be covered are relatively small, moving is often done manually. This takes up much manpower, since often at least four men are needed per element, and is, moreover, quite often in violation of the current health and safety laws with regard to the working conditions. Also, the elements can be moved between the two locations using a crane, hoist truck or like means of transport. An advantage thereof is that these enable a stack of construction elements to be moved simultaneously. A disadvantage is that the elements need to be destacked at their destination, which still requires considerable manpower and time.

DE 27 30 626 discloses an apparatus, comprising a frame which is equipped with clamping means which can be brought into a clamping position around the circumferential edge of a layer of pavement bricks. This layer can then be picked up and transported to a position of use, where it can be released at a desired location. In this way, layers of bricks can be handled, one at the time, without substantial effort or manpower.

The invention contemplates an apparatus for manipulating substantially plate-shaped construction elements, in which disadvantages of the known apparatuses are avoided while retaining the advantages thereof. For this purpose, an apparatus according to the invention is characterized by the measures according to claim 1.

An apparatus according to the invention enables a plurality of construction elements to be moved simultaneously to a desired location and to be delivered there one by one. In this manner, manpower can be saved and, moreover, the elements can be positioned fast, safely and accurately.

A suitable cooperation between the support means and the delivery means each time allows a lowermost element of the stack to be isolated, so that this element is only supported by the delivery means. The isolated element can then be manipulated, in particular be released, without this having any effect on the remaining stack.

The isolation and release of the lowermost element can be realized using relatively simple means, while, moreover, the force of gravity can be used in an advantageous manner. For instance, the support and delivery means can each be provided with, for instance, two sets of cams, which cams are located above each other, which sets are each movable between a first, supporting position, in which the cams of the sets extend under the lowermost element and, for instance, the second lowermost element of the stack respectively, and a second, non-supporting position. By moving the two sets of cams in the right order between these positions, each time the lowermost element can be isolated from the stack and released, while the superjacent elements will fall down one position under the force of gravity and the apparatus is ready for delivery of the next element.

The cams of the delivery and support means can, for instance, be driven by hydraulic drive means and are preferably remote-controllable, which promotes the safety of the apparatus. Each cam can then be driven separately, or the cams can be driven collectively, for instance per set, by a single drive means via transmission means suitable for this purpose. Collective driving can contribute to a simpler construction and control.

Further, at least a part of the moving order of the sets of first and second cams can be coupled, either mechanically or via control logic. In this manner, the control of the apparatus can be further simplified and, in addition, security measures can be built in, so that, for instance, the upper cams can only be moved to a non-supporting position if the lower cams are in a supporting position. This prevents the possibility of the entire stack of elements falling down all at once due to incorrect operation of the drive means and thus secures the safety of the apparatus even better. Of course, provisions can be made to be able to switch off such security settings, when such a delivery of a complete stack is desired, for instance when the apparatus is used to move the plate-shaped construction elements to an intermediate or storage location.

In a further advantageous elaboration, an apparatus according to the invention is characterized by the measures according to claim 9.

Adjusting the support and delivery means such that these can also take up construction elements individually yields an apparatus which has an even wider range of application. Such a taking-up function can, for instance, be achieved by designing the delivery and support means, in particular the sets of first and second cams thereof, such that their mutual positions are interchangeable viewed in vertical direction, for instance by means of lifting means. In this manner, an element can be taken up from a base by moving a then lower set of cams under this element, after which the upper cams can be moved from a supporting position to a non-supporting position, while a stack located on these cams comes to rest on the element just taken up, after which these upper cams can be moved downwards by means of the lifting means under the other cams or at least under the then lowermost construction element, after which the next construction element can be taken up from a base, in the manner described hereinabove.

In an alternative embodiment, an apparatus according to the invention is characterized by the measures according to claim 11.

In this embodiment, the delivery and support means are formed by a number of substantially vertically arranged screw spindles, where the construction elements are directly, or by intervention of suitable adaptor means, taken up between windings, preferably two successive windings, and can be transported upwards or downwards by synchronous rotation of the screw spindles, while the lowermost winding, at least adaptor, can take up or deliver an element.

In a further elaboration, an apparatus according to the invention is particularly suitable for manipulating reinforcement mats manufactured, for instance welded, from wire. Here, the support and delivery means can extend through meshes formed between the wires, or under the wires.

In a particularly advantageous embodiment, an apparatus according to the invention is characterized by the measures according to claim 14.

Suitable spacers can help to correctly position the support and delivery means within the meshes of the stack of reinforcement mats, that is, at a right distance from the surrounding wires, so that support and delivery means can adequately support these wires in a first position, are clear therefrom in a second position and further have sufficient freedom of movement to be able to move unhindered between the first and second position. In this manner, a proper and safe working of the apparatus can be guaranteed, in which the elements can, on the one hand, be adequately supported and cannot fall down unintentionally and can, on the other hand, be released without a hitch.

The invention further relates to a method for manipulating substantially plate-shaped elements, characterized by the measures according to claim 17.

Such a method enables relatively large and heavy construction elements to be manipulated in an efficient, time-saving manner, in which the elements are taken up at a first location, for instance a supply location, one by one or several at a time, are then moved to a second location and are delivered there, one by one or several at a time.

In the further subclaims, further advantageous embodiments of an apparatus and method according to the invention are described.

To clarify the invention, exemplary embodiments of an apparatus according to the invention as well as the use thereof will be explained with reference to the drawing, in which:
Fig. 1 shows a top plan view of an apparatus according to the invention, provided with a stack of construction mats;
Fig. 2 shows a front view of the apparatus of Fig. 1;
Fig. 3 shows a side view of the apparatus of Fig. 1;
Fig. 4A shows, enlarged, a top plan view and side view of a set of support and delivery means of the apparatus of Fig. 1, in a first position;
Fig. 4B shows the delivery means of Fig. 4A, in a second position;
Fig. 5 shows an alternative embodiment of a set of support and delivery means according to the invention, designed as a screw spindle; and
Figs. 6A-D show a second alternative embodiment of a set of support and delivery means according to the invention, designed as a pivotal rod with two cams located one above the other.

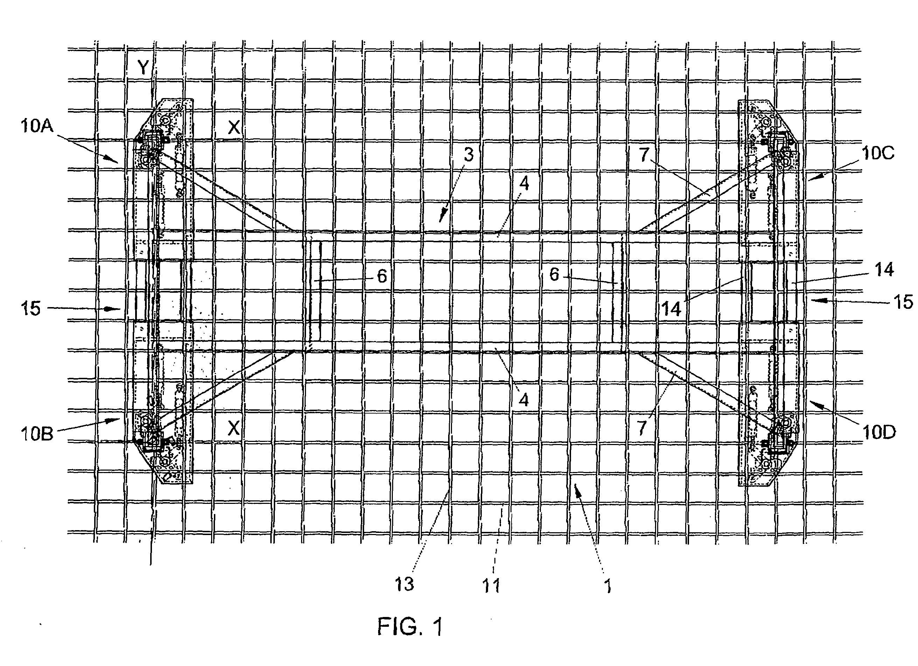

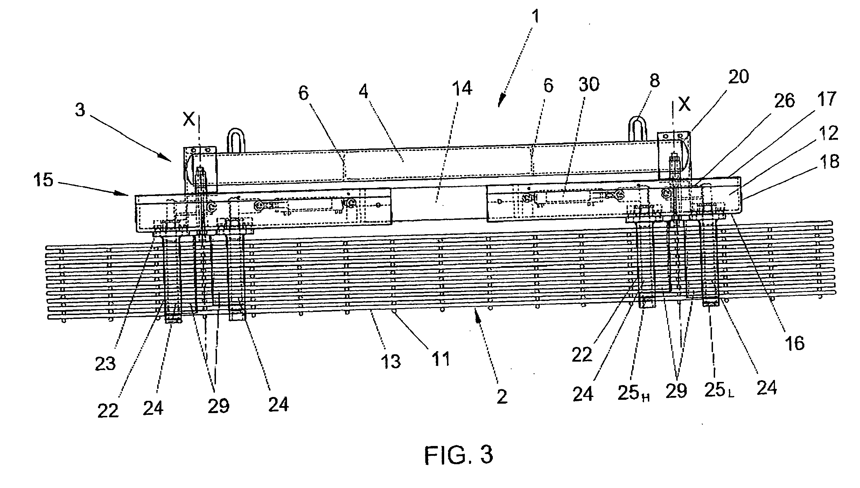

The Figs. 1-3 show a top plan view, front view and side view respectively of an apparatus for manipulating substantially plate-shaped construction elements, in particular reinforcement mats.

In this description, a reinforcement mat is at least understood to be a mat 2 welded from wires, in particular metal longitudinal and cross wires 11, 13, as shown in Fig. 1, which longitudinal and cross wires 11, 13 extend substantially perpendicular to each other and are interconnected at their cross points. Such reinforcement or construction mats 2 are frequently used in construction for reinforcing concrete constructions and, depending on their use, can have a considerable size and corresponding weight. This generally makes the mats 2 difficult to manipulate.

An apparatus 1 according to the invention improves this, in that it allows a stack of mats 2 to be taken up and moved together to a location of use, where the mats 2 can be delivered one by one. For this purpose, the apparatus 1 comprises a frame 3 and four sets of support and delivery devices 10A-D, located near four angular points of the frame 3.

The frame 3 is built up from two parallel longitudinal beams 4, which are interconnected near their ends by suspension beams 5 and are, at some distance from these ends, connected by at least two cross beams 6. The suspension beams 5 project on both sides of the longitudinal beams 4 and, approximately at the height of the cross beams 6, are connected at their projecting ends to the longitudinal beams 4 via inclined support beams 7. Thus, a rigid, truss-like frame 3 is formed, which acts as a suspension construction for the support and delivery means 10A-D yet to be discussed. For this purpose, each suspension beam 5 is provided, near its ends, with an eye 8, which allows the frame 3 to be suspended, in use, from a crane, crab or like means of transport.

From each suspension beam 5, a subframe 15 is suspended, in each of which, two sets of support and delivery means 10A,B and 10C,D are placed. The subframes 15 each comprise two box-shaped end parts 12 interconnected by two parallel support beams 14 extending into the end parts 12. Each box-shaped end part 12 comprises a pentagonal bottom plate 16, pentagonal cover plate 17 and raised walls 18 extending around these plates 16, 17. The cover plates 17 are provided, on an outside, with a bracket 20, by means of which the end parts 12 and consequently the subframes 15 are suspended from the ends of the suspension beam 5, with the subframe 15 extending substantially parallel to the suspension beam 5.

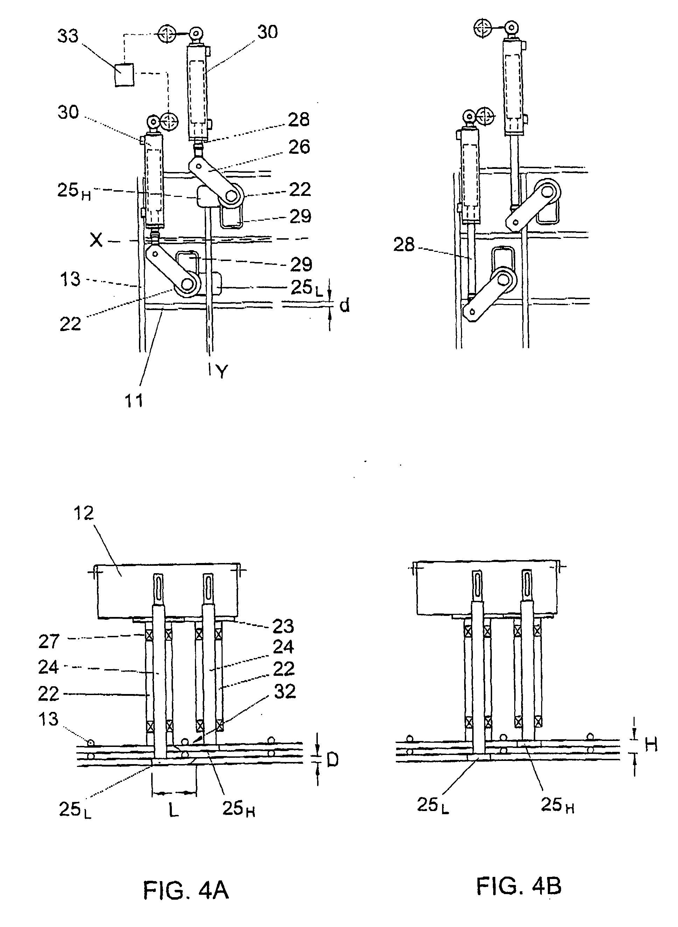

The support and delivery means 10A-D are the same for all four angular points of the frame 3, and will therefore hereinafter be described with reference to one set (namely the set indicated by 10D in Fig. 1). In the Figs. 4A, B, this set is shown, enlarged, in top plan and side view, for two different to be discussed hereinafter.

The support and delivery means 10 comprise two substantially equally long, circular tube parts 22, which are each fixed, using a flange 23, on an outside of the bottom plate 16 of end part 12, substantially perpendicular thereto. The tube parts 22 are arranged on both sides of two imaginary, vertical planes X, Y (see Fig. 1), of which the X plane extends substantially perpendicular to the suspension beam 5, at the height of the suspension brackets 20, and the Y plane extends substantially perpendicular to the X plane, at the height of, or at least near the eyes 8.

The tube parts 22 are each provided, on a side proximal to the X plane, with a rib 29 which extends throughout virtually the entire length of the tube parts 22 and, in the exemplary embodiment shown, has the shape of a substantially rectangular box beam.

Within each tube part 22, a rod-shaped part 24 is placed in a pivotable manner, for instance by means of one or more bearings. These rod-shaped parts 24 are each provided, at a first end, with a cam 25 extending in radial direction, which projects outside the tube parts 22, which, for this purpose, can be provided with suitable slotted openings at the height of these cams 25. Here, an upper side 32 of one cam, hereinafter designated as 25_{H}, functioning as a supporting surface, is located, viewed in axial direction, a distance H higher than the upper side 32 of the other cam, hereinafter to be designated as 25_{L}, with H being approximately equal to a diameter d of the wires 11, 13 of the reinforcement mats 2. The cams 25_{H,L} have, in top plan view, a substantially rectangular form, which approximately corresponds to the diameter of the ribs 29, for a reason which will be discussed later. Further, in side view, the cams 25_{H,L} preferably have a slightly wedge-shaped configuration, with the thickness D of the cams slightly decreasing in the direction of the free edges and being, at least at these edges, slightly smaller than d, with d again representing the diameter of the reinforcement wires 11, 13.

Furthermore, the rod-shaped parts 24 extend by a second end into the box-shaped end part 12, through the bottom plate 16, and there, they are each connected to a piston rod 28 of a piston assembly 30 via a drive arm 26. The piston assemblies 30 are fixedly arranged in the box-shaped end part 12, substantially parallel to the suspension beam 5 and are remote-controllable via control means 33. The stroke of the piston rod 28 and the dimensions of the drive arm 26 are chosen such that, upon a complete stroke of the piston rod 28, the rod-shaped parts 24 can be rotated through an angle of approximately 90°. The cams 25_{H,L} can then pivot from a first position, as shown in Fig. 4A, in which the piston rod 28 is virtually completely retracted and the cams extend in the direction of the Y plane, substantially perpendicular thereto, to a second position, as shown in Fig. 4B, in which the piston rod 28 has reached its extreme position and the cams 25_{H,L} are located substantially in line with the ribs 29. Here, the earlier-mentioned design of the cams 25_{H,L} ensures that, in this second position, the cams do not project in relation to the outer contour of the rib 29. The advantage of this will be discussed later.

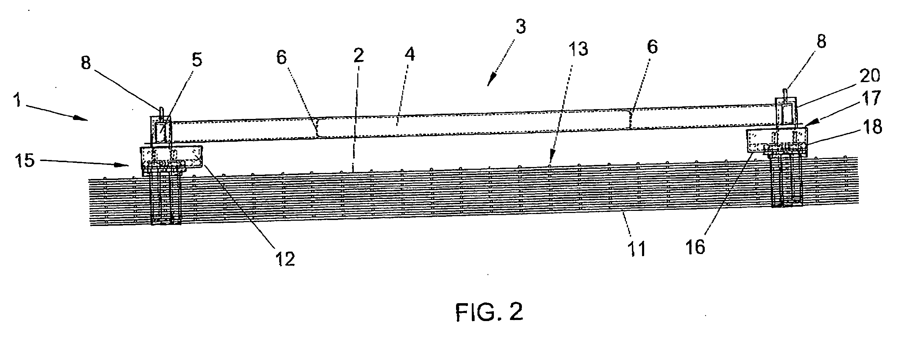

The described apparatus 1 can be used as follows for manipulating a stack of reinforcement mats 2. The apparatus 1 is suspended from the eyes 8 from, for instance, a crane, hoist truck, crab or like means of transport. In this manner, the apparatus 1 is positioned above a stack of reinforcement mats 2 at, for instance, a storage or supply location. Then, the apparatus 1 is lowered using the means of transport or hoisting means (not shown) provided between the means of transport and the apparatus 1, with the support and delivery means 10A-D extending through the meshes of the stacked mats 2, as shown in Fig. 2. Here, the piston rods 28 are maximally extended and thus, the cams 25_{H,L} are in their second position in or under the ribs 29 (see Fig. 4B).

The ribs 29 contribute to a correct positioning of the support and delivery means 10, in particular the cams 25_{H,L} in the meshes, in that the ribs 29 keep the cams 25_{H,L} at a sufficient distance, viewed in the Y direction, from a cross wire 11 extending between the support and delivery means 10. This will prevent the cams 25 from coming into contact with this cross wire 11, so they will not be damaged and maintain their freedom to pivot to the first position.

The radial length L of the cams 25 and the mutual distance between the ribs 29, viewed in the X direction, is chosen such that the cams 25_{H,L} can always extend, in their first position, beyond a longitudinal wire 13 extending between the ribs 29, so that the cams will always be able to adequately support the mats 2. Further, the ribs 29 limit an angle through which the mats 2 may be rotated relative to the support and delivery means 10, seen in top plan view. This also guarantees an adequate support of the wires 13 by the cams 25.

After the support and delivery means 10 have thus been inserted into the stack of reinforcement mats 2, the lower cams 25_{L} are pivoted to the first position using the piston assemblies 30, so these cams 25_{L} will extend under a cross wire 11 of the lowermost mat 2 of the stack to be taken up, as shown in Fig. 2. The stack of reinforcement mats 2 now rests on four cams 25_{L}. In the example shown, in this manner, the apparatus 1 can take up ten mats 2 at once. It will be clear, however, that the maximum number of construction mats 2 to be taken up can be varied as desired, determined by *inter alia* the length of the tube parts 22, the thickness of the construction mats 2 and the bearing capacity of the apparatus 1.

The stack of construction mats 2 resting on the lower cams 25_{L} can then, using the means of transport, be transported to a desired location where the mats 2 can be delivered one by one. For this purpose, the lowermost construction mat 2 is first isolated from the superjacent construction mats by pivoting the upper cams 25_{H} from their second position under the ribs 29 (see Fig. 4B) to their first position, by retracting the respective piston rods 28. Here, the cams 25_{H}, thanks to their wedge shape and maximum thickness d, can be simply slid between two cross wires 13 located one above the other of the lowermost and the second lowermost construction mat 2, since these cross wires 13, due to the longitudinal wires 11 located therebetween, are at a mutual distance d from each other.

In this manner, the stack of construction mats above the lowermost construction mat is taken over by the upper cams 25_{H} and the lower cams 25_{L} only support the lowermost construction mat 2. This lowermost construction mat 2 is then delivered by pivoting the lower cams 25_{L} from under this construction mat 2 to their second position. This will cause the lowermost construction mat 2 to fall down under the force of gravity. Optionally, guide means (not shown) can be provided so that this falling down takes place in a controlled manner. The apparatus 1 can then be prepared for delivery of a next, then lowermost construction mat, by successively pivoting the lower cams 25_{L} back to their first (supporting) position and pivoting the upper cams 25_{H} from under the stack to the second position, so that the stack resting until then on these upper cams 25_{H} is then transferred to the lower cams 25_{L}. After this, the new lowermost mat can be isolated from the superjacent mats and delivered in the manner described hereinabove. By repeating the above steps again and again, the complete stack can be delivered one by one, while, if desired, the apparatus 1 can each time be moved over a certain distance between the deliveries of the individual construction mats 2, so that the mats 2 can be laid down at a desired position. After destacking the stack of mats 2, the apparatus 1 can be used to manipulate a next stack of construction mats in the manner described hereinabove for the purpose of destacking that next stack.

The drives of the set of lower and the set of upper cams 25_{L,H} are preferably at least partly coupled, either through mechanical means or through electronic control means. This coupling can, for instance, be arranged such that the upper cams 25_{H} can only be moved to the second, non-supporting position if the lower cams 25_{L} are in the first, supporting position or when no construction mats are included in the apparatus 1. This has the result that a stack of mats resting on the upper cams 25_{H} cannot fall down from the apparatus unintentionally, for instance due to incorrect operation. In this manner, the safety of the apparatus is increased. Of course, such a protection can be removed if desired when one does want to be able to deliver a stack of elements at once. The cams 25_{H,L} are further remote-controllable, allowing an operator to be at a safe distance when delivering the mats.

It will be clear that other plate-shaped elements than the construction mats shown can also be manipulated using an apparatus 1 according to the invention, for instance plate-shaped prefab parts such as floor and wall parts. In that case, the support and delivery means 10 can be arranged along the edges of these elements, so that the cams 25_{H,L}, in their first position, can engage under the edges of these elements. Also, when, for instance, the elements to be moved are relatively large and flexible and thus deflect strongly, a plurality of sets of support and delivery means 10 can be used.

The support and delivery means 10 are preferably adjustably connected to the frame 3, allowing their mutual position to be adapted to the dimensions and the specific shape of the construction elements to be manipulated, for instance the length, width, mesh width and the shape of the meshes. Preferably, the mutual height distance H between the lower and the upper cams 25_{H,L} is also adjustable, allowing this distance to be adapted to the thickness of the object to be manipulated. This distance H can, of course, also be adjusted such that it allows more than one element of the superjacent stack to be isolated, and thus also allows more than one element to be delivered. Adjusting the mutual cam position can be done once only or repeatedly, manually or using drive means.

In an alternative embodiment, the apparatus shown in the Figs. 1-4 also allows construction elements 2 to be taken up one by one. For this purpose, the cams 25_{H,L} can be arranged so as to be movable in vertical direction by means of suitable lifting means (not shown), such that their mutual vertical positions can be interchanged. This allows a lower set of cams to take up a first mat from a base, by pivoting these cams 25_{L} under the mat, in the manner described hereinabove. The mat 2 can then be lifted by approximately a mat thickness using the means of transport, after which the upper cams 25_{H} can be moved downwards, using the lifting means, under the, until then, lower cams 25_{L}. These cams 25_{H} can then be pivoted, in the known manner, under a second mat 2 to be taken up. Then, the cams 25_{L} can first be pivoted from under the mat taken up first, causing this mat to fall down on the mat taken up second. The cams 25_{L} can then be moved downwards, using the lifting means, under the mat taken up second, after which a next mat can be taken up, in the manner described. The lifting means can, for instance, comprise a guide rail, in which the cams can be moved upwards and downwards using, for instance, an electromotor.

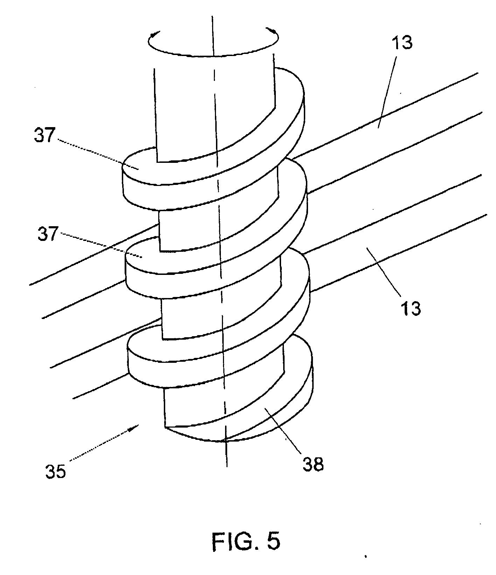

In an alternative embodiment, the support and delivery means 10 can be designed as substantially vertically arranged screw spindles 35, as shown in Fig. 5. Such screw spindles can be arranged pair-wise opposite each other in a similar manner to the support and delivery means 10 described hereinabove, near two edges opposite each other of a construction element 2, or in case of a construction mat 2, near two cross or longitudinal wires 13, 11 located at a distance from each other. Here, these edges or wires 13, 11 are taken up between successive windings 37. By driving the screw spindles 35, the construction elements will, depending on the drive direction, move upwards or downwards and the lowermost winding 38 will each time take up, or deliver an element.

When such screw spindles 35 are used for manipulating construction mats 2, next to each screw spindle 35 preferably a rod-shaped element is arranged, which extends parallel to and at a short distance from this screw spindle 35. In this manner, cross or longitudinal wires 13, 11 extending between the windings 37 can be locked against the screw spindle, preventing them from slipping out of the windings 37.

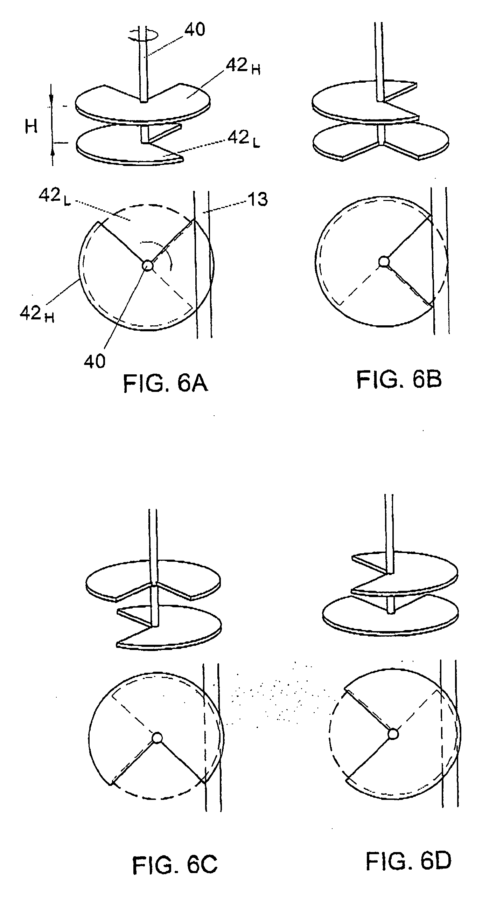

In a further alternative embodiment, the support and delivery means 10 can be designed as shown in Fig. 6. In this variant, a set of support and delivery means 10 is formed by a vertically arranged bar 40, which is provided, near a lower side, with two cams 42_{H,L} located one above the other. The cams 42_{H,L} are disc-shaped, missing a quarter of the circle segment. The cams 42_{H,L} are non-rotatably connected to the bar 40 such that the missing circle segments are rotated approximately 90° relative to each other. The mutual distance H between the cams is approximately equal to the thickness of the construction elements 2 to be manipulated, that is, in the case shown, the diameter of the wires 13. The cams 42_{H,L} are preferably provided so as to be slidable on the bar 40 such that the distance H can be adjusted as desired. Around the bar 40, a tube (not shown) can be provided, in which the bar can be pivotally bearing-mounted. This tube can then fulfill a same function as the tube parts 22 and ribs 29 in the embodiment shown in the Figs. 1-4, that is, to ensure that the support and delivery means are always at the right distance from the edge or wires 11,13 to be supported, so that the cams can move unhindered between a supporting and releasing position.

The bars 40 with the cams 42_{H,L} can be arranged, in a manner similar to that described with reference to the previous embodiments, near an edge or wire 13, 11 of a construction element to be manipulated. Here, a stack of construction elements 2 placed on the upper cams 42_{H} can be delivered one by one through rotation of the bar 40. This will be clarified with reference to the Figs. 6A-D, in which one rotation of the bar 40 is illustrated in four successive steps, with the bar 40 being rotated through 90° in each step. For each step, the bar 40 with the cams 42_{H,L} is shown in perspective view and in top plan view. In this top plan view, the upper cams 42_{H} are shown in continuous lines and the lower cams 42_{L} in interrupted lines. In addition, for reasons of clarity, the lower cams 42_{L} are shown slightly smaller than the upper cams 42_{H}. In reality, the two cams 42_{H,L} preferably have the same dimensions.

In a first position (Fig. 6A), the upper cam 42_{H} extends under a cross wire 13 of a construction mat 2, and the cam 42_{H} can thus support this construction mat 2 or a stack of construction mats 2. When the bar 40 is rotated from this position through 90°, as shown in Fig. 6B, the missing circle segment is rotated in the direction of the cross wire 13, and the wire 13 is no longer supported. This will cause the mat or stack of mats to fall down one position on the lower cams 42_{L}. When, thereupon, the bar 40 is further rotated through another 90° (Fig. 6C), the upper cam 42_{H} will slide between a lowermost and a second lowermost mat 2 and this cam 42_{H} thus takes over the stack of mats above the lowermost mat 2 from the lower cam 42_{L}. During the fourth and last step of the rotation, the bar 40 is rotated further to the starting position shown in Fig. 6A and the lowermost mat is isolated from the rest of the stack between the two cams 42_{H,L}, ready to be delivered. This delivery is done at the moment when the bar 40 is pivoted from the position shown in Fig. 6D to the position shown in Fig. 6A. In this manner, the missing circle segment is maneuvered under the wire 13, so this wire is no longer supported by the cam 42_{L} and the construction mat is released while the superjacent stack is still supported by the upper cam 42_{H}. By thus rotating the bar 40, through cooperation of the cams 42_{H,L}, each time an element is isolated from the stack and then delivered.

In an embodiment as described hereinabove, per set of support and delivery means 10, one piston assembly or other suitable drive means is sufficient. This contributes to a robust arrangement, which can, moreover, be safely and simply controlled, since the successive movements of the cams 42_{H,L} are mechanically fixed.

Optionally, the upper sides of the cams 42_{H,L} can be provided with friction-reducing means, such as, for instance, rollers, in order to facilitate the movement of the cams 42_{H,L} under the stack of construction elements.

The invention is by no means limited to the exemplary embodiments shown in the description and the drawing. Many variations thereof are possible within the scope of the invention as set forth in the claims.

For instance, drive means other than the hydraulic drive means shown can be used, for instance electric or pneumatic drive means. Further, a plurality of sets of cams can be placed above each other, allowing a plurality of elements to be isolated from the stack. Further, instead of being arranged pivotally around a substantially vertical axis, as shown in the embodiments, the cams can also be arranged translatably around a substantially horizontal axis, with the cams being pivoted from a substantially horizontal, supporting position to a substantially vertical, non-supporting position. The cams can also be arranged so as to be translatable.

These and many variations are considered to be within the scope of the invention as set forth in the claims following hereinafter.

## Claims

1. An apparatus for manipulating substantially plate-shaped construction elements (2), comprising a frame (3), provided with coupling means (8) for fixing the frame (3) to means of transport for moving the frame (3), support means (10) for taking up and supporting a series of construction elements (2) and delivery means (10) for delivery of the construction elements (2), **characterized by** the fact that during use the construction elements (2) are taken up into the support means (25_{H}; 37; 42_{H}) in stacked form, and the delivery means (25_{L}, 38, 42_{L}) can be operated so as to be arranged at least partly under the support means (25_{H}; 37; 42_{H}), in particular the stack of construction elements (2) taken up therein, wherein the support (25_{H}; 37; 42_{H}) and delivery means (25_{L}, 38, 42_{L}) can cooperate in such a manner as to enable a lowermost element of the stack to be transferred from the support means (25_{H}; 37; 42_{H}) to the delivery means (25_{L}, 38, 42_{L}), thereby isolating said lowermost element of the stack, after which this element can be released by the delivery means, thus enable the construction elements (2) to be delivered one by one.

2. An apparatus according to claim 1, wherein the support means (25_{H}; 37; 42_{H}) are arranged such that, after delivery of a lowermost construction element, the remaining, superjacent construction elements (2) move down one position.

3. An apparatus according to claim 2, wherein the support means (25_{H}; 37; 42_{H}) are arranged such that the moving down of the construction elements (2) takes place under the force of gravity.

4. An apparatus according to any one of the preceding claims, wherein the support and delivery means (10) comprise a set of first cams (25_{H}) and a set of second cams (25_{L}), which cams (25_{H,L}) are, per set, movable independently of each other between a first, supporting position in which the first and second cams (25_{H,L}) form a first and a second support surface respectively, which are located one above the other and can each support at least a part of a stack of construction elements (2), and a second, release position, in which the sets of cams (25_{H,L}) do not support the construction elements (2), at least a part thereof.

5. An apparatus according to claim 4, wherein the perpendicular distance (H) between the first and second support surface (25_{H,L}) is approximately equal to and preferably slightly greater than the thickness (d) of one plate-shaped construction element (2).

6. An apparatus according to claim 4 or 5, wherein the first and/or the second cams (25_{H,L}) are pivotable between the first and second position.

7. An apparatus according to claim 4 or 5, wherein the first and/or the second cams (25_{H,L}) are translatable between the first and second position.

8. An apparatus according to any one of claims 4-7, wherein the movements of the set of first cams (25_{H}; 42_{H}) and the set of second cams (25_{L}, 42_{L}) are coupled, such that the upper set of cams (25_{H}; 42_{H}) can only be moved from the first, supporting position to the second, release position, if the lower set of cams (25_{L}, 42_{L}) is in the first, supporting position.

9. An apparatus according to any one of the preceding claims, wherein the support and delivery means (10) are arranged such that they enable the plate-shaped construction elements (2) to be taken up one by one, wherein the delivery means are arranged to engage and pick up a construction element and the support means are arranged to support a stack of construction elements picked up earlier and wherein the support and delivery means are arranged to cooperate, so as to enable the construction element picked up by the delivery means to be transferred to the support means so as to form part of the stack supported by said support means, thereby freeing the delivery means to pick up a subsequent construction element.

10. An apparatus according to any one of claims 5 - 9, wherein the first and second cams (25_{H,L}) are supported by lifting means, so that their mutual positions, viewed in vertical direction, are interchangeable, for taking up construction elements (2) one by one.

11. An apparatus according to claim 1, wherein the support and delivery means (10) comprise substantially vertically arranged screw spindles (35), wherein, between windings (37; 38), taking-up positions for the construction elements (2) have been formed and wherein the construction elements (2), through rotation of the screw spindles (35), can move one place each time and, depending on the direction of rotation, a lowermost taking-up position (38) takes up, or delivers a construction element (2).

12. An apparatus according to any one of the preceding claims, wherein the delivery and/or the support means (10) are driven by remote-controllable drive means (30).

13. An apparatus according to claim 12, wherein the drive means (30) comprise at least one pneumatic or hydraulic cylinder assembly.

14. An assembly of an apparatus according to any one of the preceding claims and a series of substantially plate-shaped elements (2), **characterized by** the fact that the support and delivery means (10) are set up near an edge of the construction elements (2).

15. An assembly of an apparatus according to any one of claims 1-134 and a series of substantially plate-shaped elements (2), **characterized by** the fact that the plate-shaped construction elements (2) are manufactured from metal wire- (11, 13) and the support and delivery means (10) extend through meshes between these wires 11, 13), wherein the first and second cams (25_{L,H}; 37; 42_{L,H}) in the first position engage under or behind said wires (11, 13).

16. An assembly according to claim 15, wherein spacers (29) are provided, for maintaining a desired distance between the support and delivery means (10) and the wires (11, 13) of the construction elements (2), so that movement of the first and second cams (25_{L,H}; 37; 42_{L,H}) between the first and second position is possible unhindered and the cams can, in a first position, extend at least partly under a wire (11, 13) and, in a second position, are located within a mesh.

17. A method for manipulating substantially plate-shaped construction elements (2) with an apparatus according to any one of claims 1-134, **characterized by** the fact that the construction elements (2) are taken up one by one or per stack, are moved to a desired location and are then delivered one by one, in reverse order of taking-up.

18. A method according to claim 17, wherein a stack of construction elements (2) is delivered one by one by means of at least two sets of movable cams (25_{L,H}; 37; 42_{L,H}), comprising the following steps:
- moving a first set of cams (25_{L}, 38, 42_{L}) to a first position, in which the cams extend at least partly under a lowermost construction element of the stack;
- moving a second set of cams (25_{H}; 37; 42_{H}) to a first position, between a lowermost element (2) of the stack and a superjacent element;
- moving the first set of cams (25_{L}, 38, 42_{L}) to a second, non-supporting position, thereby delivering the lowermost element (2);
- moving back the first set of cams (25_{L}, 38, 42_{L}) to a first, supporting position;
- moving the second set of cams (25_{H}; 37; 42_{H}) to a second position, thereby bringing at least the lowermost construction element (2) of the remaining stack down onto the first set of cams; after which the above steps can be repeated until all elements have been delivered.

19. A method according to claim 18, wherein the first and second set of cams are first brought in the second position before the cams are brought into and/or to the stack of construction elements to be manipulated, wherein the stack is then delivered via the said steps.

20. A method according to claim 18 or 19, wherein, after all elements of the said stack have been delivered, a next stack of construction elements is delivered, using the cams, via the said steps.

## Patentansprüche

1. Vorrichtung zum Handhaben im Wesentlichen plattenförmiger Bauelemente (2), mit einem Rahmen (3), der mit Verbindungsvorrichtungen (8) zum Befestigen des Rahmens (3) an Transportvorrichtungen zum Bewegen des Rahmens (3) versehen ist, Haltevorrichtungen (10) zum Aufnehmen und Halten einer Anzahl der Bauelemente (2), und Zuführvorrichtungen (10) zur Zuführung der Bauelemente (2),
**dadurch gekennzeichnet, dass** bei der Verwendung die Bauelemente (2) in gestapelter Form in die Haltevorrichtungen (25_{H};37;42_{H}) aufgenommen werden, und dass die Zuführvorrichtungen (25_{L},38,42_{L}) derart betätigt werden können, dass sie zumindest teilweise unter den Haltevorrichtungen (25_{H};37;42_{H}) und insbesondere dem darin aufgenommenen Stapel von Bauelementen (2) angeordnet werden, wobei die Haltevorrichtungen (25_{H};37;42_{H}) und die Zuführvorrichtungen (25_{L}, 38,42_{L}) derart zusammenwirken können, dass sie das Übertragen des untersten Elements des Stapels von den Haltevorrichtungen (25_{H};37; 42_{H}) zu den Zuführvorrichtungen (25_{L},38,42_{L}) ermöglichen, wobei **dadurch** das unterste Element des Stapels isoliert wird, woraufhin dieses Element mittels der Zuführvorrichtung freigegeben wird, so dass die Bauelemente (2) einzeln nacheinander zugeführt werden können.

2. Vorrichtung nach Anspruch 1, bei der die Haltevorrichtungen (25_{H};37; 42_{H}) derart angeordnet sind, dass nach der Zufuhr des untersten Bauelements die übrigen, darüberliegenden Bauelemente (2) um eine Position abwärtsbewegt werden.

3. Vorrichtung nach Anspruch 2, bei der die Haltevorrichtungen (25H;37; 42H) derart angeordnet sind, dass die Abwärtsbewegung der Bauelemente (2) unter Schwerkrafteinwirkung erfolgt.

4. Vorrichtung nach einem der vorhergehenden Ansprüche, bei der die Halte- und Zuführvorrichtungen (10) einen Satz erster Nocken (25_{H}) und einen Satz zweiter Nocken (25_{L}) aufweisen, wobei die Nocken (25_{H,L}) pro Satz unabhängig voneinander zwischen einer ersten Position zum Halten, in der die ersten und zweiten Nocken (25_{H,L}) eine erste bzw. eine zweite Haltefläche bilden, die übereinander angeordnet sind und jeweils mindestens einen Teil eines Stapels von Bauelementen (2) halten können, und einer zweiten Position zum Freigeben bewegbar sind, in der die Sätze von Nocken (25_{H,L}) die Bauelemente (2), zumindest einen Teil derselben, nicht halten.

5. Vorrichtung nach Anspruch 4, bei der der senkrechte Abstand (H) zwischen der ersten und der zweiten Haltefläche (25_{H,L}) im Wesentlichen gleich und vorzugsweise etwas größer als die Dicke (d) eines plattenförmigen Bauelements (2) ist.

6. Vorrichtung nach Anspruch 4 oder 5, bei der die ersten und/oder die zweiten Nocken (25_{H,L}) zwischen der ersten und der zweiten Position schwenkbar sind.

7. Vorrichtung nach Anspruch 4 oder 5, bei der die ersten und/oder die zweiten Nocken (25_{H,L}) translatorisch zwischen der ersten und der zweiten Position bewegbar sind.

8. Vorrichtung nach einem der Ansprüche 4-7, bei der die Bewegungen des Satzes erster Nocken (25_{H}; 42_{H}) und des Satzes zweiter Nocken (25_{L}; 42_{L}) derart gekoppelt sind, dass der obere Satz von Nocken (25_{H}; 42_{H}) nur dann aus der ersten Position zum Halten in die zweite Position zum Freigeben bewegt werden kann, wenn sich der untere Satz von Nocken (25_{L}, 42_{L}) in der ersten Position zum Halten befindet.

9. Vorrichtung nach einem der vorhergehenden Ansprüche, bei der die Halte- und Zuführvorrichtungen (10) derart angeordnet sind, dass diese ermöglichen, die plattenförmigen Bauelemente (2) einzelnen nacheinander aufzunehmen, wobei die Zuführvorrichtungen derart angeordnet sind, dass sie an ein Bauelement angreifen und dieses aufnehmen können, und die Haltevorrichtungen derart angeordnet sind, dass sie einen zuvor aufgenommenen Stapel von Bauelementen halten können, und wobei die Halte- und Zuführvorrichtungen (10) zur derartigen Zusammenwirkung angeordnet sind, dass das von den Zuführvorrichtungen aufgenommene Bauelement zu den Haltevorrichtungen übertragen wird, um einen Teil des von den Haltevorrichtungen gehaltenen Stapels zu bilden, wodurch die Zuführvorrichtungen für die Aufnahme eines nachfolgenden Bauelements freigemacht werden.

10. Vorrichtung nach einem der Ansprüche 5-9, bei der die ersten und zweiten Nocken (25_{H,L}) durch Hubvorrichtungen derart gehalten sind, dass ihre gegenseitigen Positionen in vertikaler Richtung betrachtet austauschbar sind, um Bauelemente (2) einzeln nacheinander aufnehmen zu können.

11. Vorrichtung nach Anspruch 1, bei der die Halte- und Zuführvorrichtungen (10) im Wesentlichen vertikal angeordnete Schraubspindeln (35) aufweisen, wobei zwischen den Windungen (37;38) Aufnahmepositionen für die Bauelemente (2) ausgebildet sind und wobei die Bauelemente (2) mittels Drehung der Schraubspindeln (35) jeweils um eine Position bewegt werden können und wobei in Abhängigkeit von der Drehrichtung die unterste Aufnahmeposition (38) ein Bauelement (2) aufnimmt oder zuführt.

12. Vorrichtung nach einem der vorhergehenden Ansprüche, bei der die Halte- und/oder Zuführvorrichtungen (10) durch fernsteuerbare Antriebsvorrichtungen (30) angetrieben sind.

13. Vorrichtung nach Anspruch 12, bei der die Antriebsvorrichtungen (30) mindestens eine pneumatische oder hydraulische Zylindervorrichtung aufweisen.

14. Anordnung mit einer Vorrichtung nach einem der vorhergehenden Ansprüche und einer Anzahl im Wesentlichen plattenförmiger Elemente (2), **dadurch gekennzeichnet, dass** die Halte- und/oder Zuführvorrichtungen (10) nahe einem Rand der Bauelemente (2) positioniert sind.

15. Anordnung mit einer Vorrichtung nach einem der Ansprüche 1-13 und einer Anzahl im Wesentlichen plattenförmiger Elemente (2), **dadurch gekennzeichnet, dass** die plattenförmigen Bauelemente (2) aus Metalldraht (11,13) hergestellt sind und die Halte- und/oder Zuführvorrichtungen (10) durch die Maschen zwischen diesen Drähten (11,13) verlaufen, wobei die ersten und zweiten Nocken (25_{L,H}; 37; 42_{L,H}) in der ersten Position unter oder hinter den Drähten (11,13) angreifen.

16. Anordnung nach Anspruch 15, bei der Abstandhalter (29) vorgesehen sind, um einen gewünschten Abstand zwischen den Halte- und Zuführvorrichtungen (10) und den Drähten (11,13) der Bauelemente (2) aufrechtzuerhalten, derart, dass eine Bewegung der ersten und zweiten Nocken (25_{L,H};37;42_{L,H}) zwischen der ersten und der zweiten Position ungehindert möglich ist und die Nocken sich in einer ersten Position zumindest teilweise unter einen Draht (11,13) erstrecken können und in einer zweiten Position in einer Masche angeordnet sind.

17. Verfahren zum Handhaben im Wesentlichen plattenförmiger Bauelemente (2) mit einer Vorrichtung nach einem der Ansprüche 1-13, **dadurch gekennzeichnet, dass** die Bauelemente (2) pro Stapel nacheinander einzeln aufgenommen werden, an eine gewünschte Stelle bewegt werden und dann in umgekehrter Reihenfolge des Aufnehmens nacheinander einzeln zugeführt werden.

18. Verfahren nach Anspruch 17, bei dem ein Stapel von Bauelementen (2) mittels mindestens zweier Sätze bewegbarer Nocken (25_{L,H};37; 42_{L,H}) nacheinander einzeln zugeführt wird, mit folgenden Schritten:
- Bewegen eines ersten Satzes von Nocken (25_{L};38; 42_{L}) in eine erste Position, in der sich die Nocken mindestens teilweise unter das unterste Bauelement des Stapels erstrecken;
- Bewegen eines zweiten Satzes von Nocken (25_{H}; 37; 42_{H}) in eine erste Position zwischen dem untersten Element (2) des Stapels und einem darüberliegenden Element;
- Bewegen des ersten Satzes von Nocken (25_{L};38; 42_{L}) in eine zweite, nichthaltende Position und **dadurch** erfolgendes Zuführen des untersten Elements (2);
- Bewegen des ersten Satzes von Nocken (25_{L};38; 42_{L}) zurück in eine erste oder Halteposition;
- Bewegen des zweiten Satzes von Nocken (25_{H};37;42_{H}) in eine zweite Position, wodurch mindestens das unterste Bauelement (2) des verbleibenden Stapels abwärts auf den ersten Satz von Nocken bewegt wird; woraufhin die oben angeführten Schritte wiederholt werden können, bis sämtliche Elemente zugeführt worden sind.

19. Verfahren nach Anspruch 18, bei dem der erste und der zweite Satz von Nocken zuerst in die zweite Position bewegt werden, bevor die Nocken in diese gebracht werden, und/oder zu dem handzuhabenden Stapel von Bauelementen bewegt werden, wobei der Stapel dann mittels der genannten Schritte zugeführt wird.

20. Verfahren nach Anspruch 18 oder 19, bei dem, nachdem sämtliche Elemente des Stapels zugeführt worden sind, unter Verwendung der Nocken mittels der genannten Schritte ein nächster Stapel von Bauelementen zugeführt wird.

## Revendications

1. Dispositif pour manipuler des éléments de construction essentiellement en forme de plaques (2), comprenant un cadre (3), muni de moyens de couplage (8) pour fixer le cadre (3) à des moyens de transport pour déplacer le cadre (3), des moyens de support (10) pour soulever et supporter une série d'éléments de construction (2) et des moyens de livraison pour la livraison des éléments de construction (2), **caractérisé par le fait que** durant l'utilisation les éléments de construction (2) sont soulevés à l'intérieur des moyens de support (25_{H} ; 37; 42_{H}) en forme empilée, et les moyens de livraison (25_{L} ; 38 ; 42_{L}) peuvent être actionnés afin d'être agencés au moins en partie sous les moyens de support (25_{H} ; 37 ; 42_{H}), en particulier la pile d'éléments de construction (2) soulevés à l'intérieur, dans lequel le support (25_{H} ; 37 ; 42_{H}) et les moyens de livraison (25_{L} ; 38 ; 42_{L}) peuvent coopérer de telle manière à permettre à un élément le plus bas de la pile d'être transféré depuis les moyens de support (25_{H} ; 37 ; 42_{H}) vers les moyens de livraison (25_{L}; 38 ; 42_{L}), isolant ainsi ledit élément le plus bas de la pile, après quoi cet élément peut être libéré par les moyens de livraison, permettant par conséquent aux éléments de construction (2) d'être livrés un par un.

2. Dispositif selon la revendication 1, dans lequel les moyens de support (25_{H} ; 37 ; 42_{H}) sont agencés de façon à ce que, après la livraison d'un élément de construction le plus bas, les éléments de construction sus-jacents, restants (2) descendent d'une position.

3. Dispositif selon la revendication 2, dans lequel les moyens de support (25_{H} ; 37 ; 42_{H}) sont agencés de façon à ce que la descente des éléments de construction (2) ait lieu sous la force de gravité.

4. Dispositif selon l'une quelconque des revendications précédentes, dans lequel les moyens de support et de livraison (10) comprennent une série de premières cames (25_{H}) et une série de secondes cames (25_{L}), lesquelles cames (25_{H,L}) sont, par série, mobiles indépendamment l'une de l'autre entre une première position de support dans laquelle les premières et secondes cames (25_{H,L}) forment une première et une seconde surface de support respectivement, qui sont situées l'une au-dessus de l'autre et peuvent chacune supporter au moins une partie d'une pile d'éléments de construction (2), et une seconde position de libération, dans laquelle les séries de cames (25_{H,L}) ne supportent pas les éléments de construction (2), au moins une partie de ceux-ci.

5. Dispositif selon la revendication 4, dans lequel la distance perpendiculaire (H) entre la première et la seconde surface de support (25_{H,L}) est approximativement égale à et de préférence légèrement supérieure à l'épaisseur (d) d'un élément de construction en forme de plaques (2).

6. Dispositif selon la revendication 4 ou 5, dans lequel les premières et/ou les secondes cames (25_{H,L}) peuvent pivoter entre la première et la seconde position.

7. Dispositif selon la revendication 4 ou 5, dans lequel les premières et/ou les secondes cames (25_{H,L}) sont transférables entre la première et la seconde position.

8. Dispositif selon l'une quelconque des revendications 4-7, dans lequel les mouvements de la série de premières cames (25_{H} ; 42_{H}) et la série de secondes cames (25_{L} ; 42_{L}) sont couplés, de façon à ce que la série supérieure de cames (25_{H} ; 42_{H}) puisse seulement être déplacée depuis la première position de support vers la seconde position de libération, si la série inférieure de cames (25_{L} ; 42_{L}) se trouve dans la première position de support.

9. Dispositif selon l'une quelconque des revendications précédentes, dans lequel les moyens de support et de livraison (10) sont agencés de façon à ce qu'ils permettent aux éléments de construction en forme de plaques (2) d'être soulevés un par un, dans lequel les moyens de livraison sont agencés pour se mettre en prise avec et ramasser un élément de construction et les moyens de support sont agencés pour supporter une pile d'éléments de construction ramassés plus tôt et dans lequel les moyens de support et de livraison sont agencés pour coopérer, afin de permettre à l'élément de construction ramassé par les moyens de livraison d'être transféré vers les moyens de support afin de faire partie de la pile supportée par lesdits moyens de support, laissant ainsi les éléments de livraison libres de ramasser un élément de construction qui suit.

10. Dispositif selon l'une quelconque des revendications 5-9, dans lequel les premières et secondes cames (25_{H,L}) sont supportées par des moyens de levage, de façon à ce que leurs positions mutuelles, vues en direction verticale, soient interchangeables, pour soulever les éléments de construction (2) un par un.

11. Dispositif selon la revendication 1, dans lequel les moyens de support et de livraison (10) comprennent des arbres filetés agencés sensiblement verticalement (35), dans lequel, entre les enroulements (37 ; 38), des positions de soulèvement des éléments de construction (2) ont été formées et dans lequel les éléments de construction (2), à travers la rotation des arbres filetés (35), peuvent déplacer d'une place à la fois et, selon la direction de rotation, une position de soulèvement la plus basse (38) soulève, ou livre un élément de construction (2).

12. Dispositif selon l'une quelconque des revendications précédentes, dans lequel les moyens de livraison et/ou de support (10) sont entraînés par des moyens d'entraînement à commande à distance (30).

13. Dispositif selon la revendication 12, dans lequel les moyens d'entraînement (30) comprennent un montage de cylindre pneumatique ou hydraulique.

14. Montage d'un dispositif selon l'une quelconque des revendications précédentes et une série d'éléments sensiblement en forme de plaques (2) **caractérisé par le fait que** les moyens de support et de livraison (10) sont installés à proximité d'un bord des éléments de construction (2).

15. Montage d'un dispositif selon l'une quelconque des revendications 1-13 et une série d'éléments sensiblement en forme de plaques (2) **caractérisé par le fait que** les éléments de construction en forme de plaques (2) sont fabriqués à partir de fil métallique (11, 13) et que les moyens de support et de livraison (10) s'étendent à travers des mailles entre ces fils (11, 13), dans lequel les premières et secondes cames (25_{L,H}; 37; 42_{L,H}) dans la première position se mettent en prise sous ou derrière lesdits fils (11, 13).

16. Montage selon la revendication 15, dans lequel des entretoises (29) sont prévues, pour maintenir une distance souhaitée entre les moyens de support et de livraison (10) et les fils (11, 13) des éléments de construction (2), de façon à ce que le mouvement des premières et secondes cames (25_{L,H} ; 37 ; 42_{L,H}) entre la première et la seconde position est possible sans entraves et que les cames puissent, dans une première position, s'étendre au moins en partie sous un fil (11, 13) et, dans une seconde position, soient situées à l'intérieur d'une maille.

17. Procédé pour manipuler des éléments de construction sensiblement en forme de plaques (2) avec un dispositif selon l'une quelconque des revendications 1-13, **caractérisé par le fait que** les éléments de construction (2) sont soulevés un par un ou par pile, sont déplacés vers un emplacement souhaité et sont ensuite livrés un par un, dans l'ordre inverse du soulèvement.

18. Procédé selon la revendication 17, dans lequel une pile d'éléments de construction (2) est livrée une par une au moyen d'au moins deux séries de cames mobiles (25_{L,H}; 37 ; 42_{L,H}), comprenant les étapes consistant à
- déplacer une première série de cames (25_{L}; 38 ; 42_{L}) vers une première position, dans laquelle les cames s'étendent au moins en partie sous un élément de construction le plus bas de la pile ;
- déplacer une seconde série de cames (25_{H} ; 37 ; 42_{H}) vers une première position, entre un élément le plus bas (2) de la pile et un élément sus-jacent ;
- déplacer la première série de cames (25_{L}; 38 ; 42_{L}) vers une seconde position de non support, livrant ainsi l'élément le plus bas (2) ;
- redéplacer la première série de cames (25_{L} ; 38 ; 42_{L}) vers une première position de support ;
- déplacer la seconde série de cames (25_{H} ; 37 ; 42_{H}) vers une seconde position, abaissant ainsi au moins l'élément de construction le plus bas (2) de la pile restante sur la première série de cames ; après quoi les étapes ci-dessus peuvent être répétées jusqu'à ce que tous les éléments aient été livrés.

19. Procédé selon la revendication 18, dans lequel la première et la seconde série de cames sont tout d'abord amenées dans la seconde position avant que les cames soient amenées à l'intérieur et/ou vers la pile d'éléments de construction qui doivent être manipulés, dans lequel la pile est ensuite livrée via lesdites étapes.

20. Procédé selon la revendication 18 ou 19, dans lequel, après que tous les éléments de ladite pile aient été livrés, une pile suivante d'éléments de construction est livrée, en utilisant les cames, via lesdites étapes.
